# EUROPEAN PATENT APPLICATION

(11) **EP 1 662 807 A2**
(43) Date of publication of application: **31.05.2006**
(21) Application number: 05109647.7
(22) Date of filing: 17.10.2005
(51) Int. Cl.: H04N 9/87

(54) **Signal output device and signal output method**

(30) Priority: 30.11.2004 JP 2004347516
(71) Applicant: KABUSHIKI KAISHA TOSHIBA, Tokyo 105-8001 (JP)
(72) Inventor: Mukaide, Takanobu Toshiba Corporation, Tokyo 105-8001 (JP)
(74) Representative: Henkel, Feiler & Hänzel

(57) **Abstract**

When it is detected that the amounts of first and second signals processable by first and second signal processing units (15, 22) respectively have been accumulated in first and second input buffers (14, 21), a control unit (25) requests the first and second signal processing units (15, 22) to start the reproducing processing, and on the basis of time information included in the first signals, the control unit (25) requests a multiplexing processing unit (17) to start the multiplexing processing of the first and second signals after the reproducing processing in the first and second signal processing units (15, 22).

## Description

The present invention relates to a signal output device and a signal output method for multiplexing and outputting signals corresponding to a video system and an audio system and the like.

As is publicly known, in a personal computer (PC) and the like, information recorded in a storage media inside thereof, and information acquired from the outside via a network or the like can be displayed on a display at the same time. However, in this instance, it is difficult to develop plural information pieces displayed on the display with their contents synchronized mutually.

In Jpn. Pat. Appln. KOKAI Publication No. 10-199141, a structure that monitors the total amount of data of code strings stored in plural buffer memories, and reads and multiplexes each code string at every moment when the total amount reaches a predetermined amount is disclosed. Further, in Jpn. Pat. Appln. KOKAI Publication No. 2004-128836, a structure that synchronizes and reproduces streaming data including a video signal or an audio signal, and multimedia signals including a video signal or an audio signal related to the streaming data at a receiving side is disclosed.

Accordingly, the present invention has been made in consideration of the above-mentioned circumstances, the object of the present invention is to provide a signal output device and a signal output method capable of multiplexing input signals of plural systems in precise synchronization and outputting the signals.

According to one aspect of the present invention, there is provided a signal output device comprising: a first input buffer configured to accumulate first signals including time information; a first signal processing unit configured to perform reproducing processing of the first signals accumulated in the first input buffer; a second input buffer configured to accumulate second signals; a second signal processing unit configured to perform reproducing processing of the second signals accumulated in the second input buffer; a multiplexing processing unit configured to multiplex and output the first signals after the reproducing processing in the first signal processing unit and the second signals after the reproducing processing in the second signal processing unit; and a control unit configured to request the first and second signal processing units to start the reproducing processing, when the amount of the first signals processable by the first signal processing unit has been accumulated in the first input buffer, and, the amount of the second signals processable by the second signal processing unit has been accumulated in the second input buffer, and request the multiplexing processing unit to start the multiplexing process, on the basis of the time information included in the first signals.

According to another aspect of the present invention, there is provided a signal output method comprising: a first step of detecting that the amount of first signals processable by a first signal processing unit which performs reproducing processing of the first signals has been accumulated in a first input buffer which accumulates the first signals including time information; a second step of detecting that the amount of second signals processable by a second signal processing unit which performs reproducing processing of the second signals has been accumulated in a second input buffer which accumulates the second signals; a third step of requesting the first and second signal processing units to start the reproducing processing, when it is detected that the amounts of the first and second signals processable have been accumulated in the first and second input buffers respectively at the first and second steps; and a fourth step of requesting a multiplexing processing unit to start the multiplexing processing of the first and second signals after the reproducing processing in the first and second signal processing units on the basis of the time information included in the first signals.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block structural diagram illustrating an optical disk reproducing device as an embodiment of the present invention;
FIG. 2 is a flow chart illustrating multiplexing processing of the optical disk reproducing device in the embodiment; and
FIG. 3 is a block structural diagram illustrating a modified embodiment of the optical disk reproducing device in the embodiment.

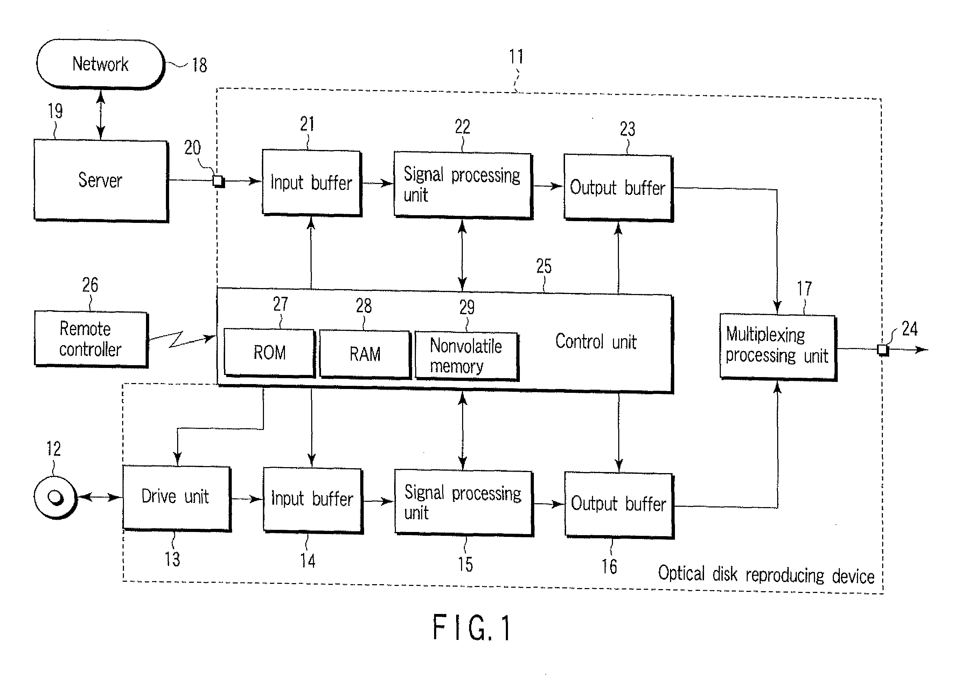

One embodiment according to the present invention will be illustrated in more details by reference to the accompanying drawings hereinafter. FIG. 1 shows an optical disk reproducing device 11 to be explained in this embodiment. The optical disk reproducing device 11 can read signals including video and audio and the like by a drive unit 13 from an optical disk 12 such as a digital versatile disk (DVD) and the like. Signals read by the drive unit 13 are supplied to a signal processing unit 15 via an input buffer 14.

The signal processing unit 15 performs predetermined reproducing processes such as an error correcting process and a decoding process and the like of input signals, and thereby restores digital signals corresponding to video and audio and the like. The signals restored by the signal processing unit 15 are supplied to a multiplexing processing unit 17 via an output buffer 16.

On the other hand, the optical disk reproducing device 11 can require an information provider connected to an external network 18 to send signals of video and audio and the like via a server 19 on the basis of information stored in the optical disk 12. Then, the signals supplied from the server 19 are supplied to a signal processing unit 22 via an input terminal 20 and an input buffer 21.

The signal processing unit 22 performs predetermined reproducing processes such as an authorizing process, an error correcting process and a decoding process and the like of input signals, and thereby restores digital signals corresponding to video and audio and the like. The signals restored by the signal processing unit 22 are supplied to the multiplexing processing unit 17 via an output buffer 23.

Then, the multiplexing processing unit 17 multiplexes signals that are output from the output buffers 16, 23 and outputs the multiplexed signals to the outside via an output terminal 24.

Herein, all the operations of this optical disk reproducing device 11 including the above-mentioned series of operations are totally controlled by a control unit 25. The control unit 25 has a central processing unit (CPU) and the like. The control unit 25 receives operating information from a remote controller 26 as an operating unit and controls the respective units on the basis of the operating information.

In this instance, the control unit 25 includes a read only memory (ROM) 27 that stores a control program to be executed by the CPU, a random access memory (RAM) 28 that provides a work area to the CPU, and a nonvolatile memory 29 that stores various kinds of setting information and control information and the like.

Generally, since the data transfer speed from the server 19 is slower than the data transfer speed from the drive unit 13, the optical disk reproducing device 11 acquires the data amount necessary for the reproducing process on the signals transferred from the drive unit 13 before the signals transferred from the server 19.

If the signal processing unit 15 starts its processing first, restored signals are output first from the signal processing unit 15, and the signals obtained from the server 19, which should be multiplexed in synchronization with the signals from the drive unit 13 under normal circumstances, are multiplexed belatedly after the signals obtained from the signal processing unit 15.

Therefore, in the present embodiment, the control unit 25 monitors the data amount accumulated in the input buffer 14, and the data amount accumulated in the input buffer 21. After the data amount accumulated in the input buffer 14 satisfies the value necessary for the start of the reproducing process by the signal processing unit 15, and the data amount accumulated in the input buffer 21 satisfies the value necessary for the start of the reproducing process by the signal processing unit 22, the control unit instructs the signal processing units 15, 22 to start their processing.

The signal processing units 15, 22 receive the request for starting the processing and acquire signals from the input buffers 14, 21, respectively. The signal processing units 15, 21 perform restoring processing and store restored signals to the output buffers 16, 23.

The signals stored into the output buffer 16 are the signals stored in the optical disk 12 and have time information (presentation time stamp (PTS)), and the output start time of the signals stored in the output buffer 16 is predetermined. For this reason, the signals stored in the output buffer 16 are so controlled as not to be output before the output start time.

On the other hand, since the signals obtained from the server 19 have no time information, the control unit 25 controls the signals stored in the output buffer 23 not to be output before the output start time so that the signals stored in the output buffer 23 should not be output before the signals stored in the output buffer 16.

At the output start time, the control unit 25 starts the multiplexing processing of the signals stored in the output buffer 16 and the output buffer 23, and the multiplexed video signal and audio signal are output.

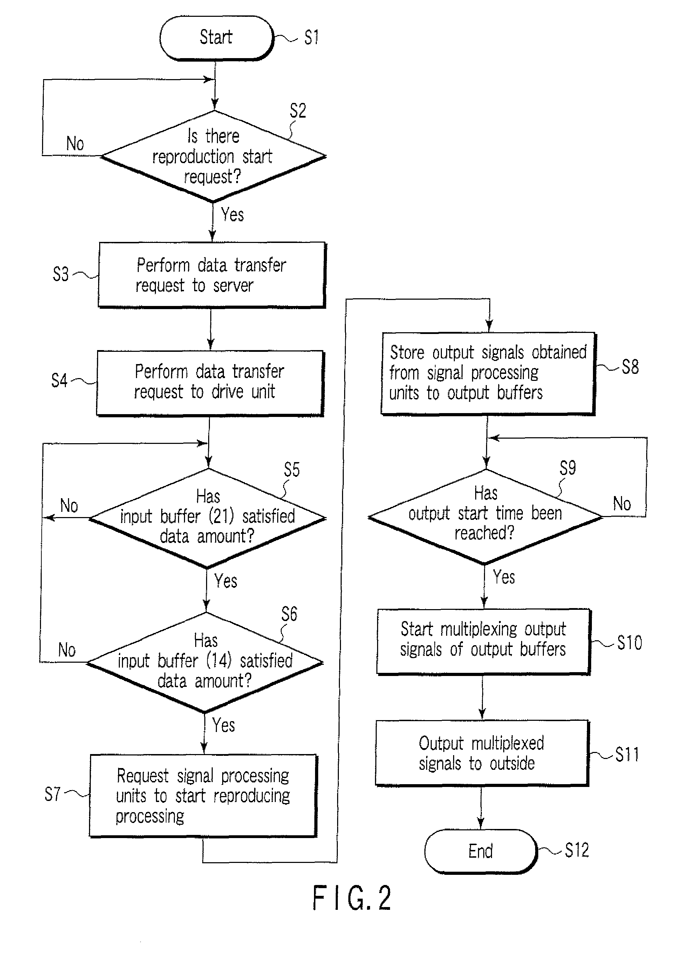

FIG. 2 shows a flow chart summarizing the above-mentioned multiplexing processing. When the processing is started (step S1), the control unit 25 determines whether there is a reproduction start request from a user in step S2. If it is determined that there is a reproduction start request (YES), the control unit 25 performs a data transfer request to the server 19 in step S3 and executes a data transfer request to the drive unit 13 in step S4.

Thereafter, the control unit 25 determines whether the input buffer 21 has satisfied the data amount necessary for the start of the reproducing processing by the signal processing unit 22 in step S5, and if it is determined that the input buffer 21 has satisfied the data amount (YES), the control unit then determines whether the input buffer 14 has satisfied the data amount necessary for the start of the reproducing processing by the signal processing unit 15 in step S6.

If it is determined that the input buffer 14 has satisfied the data amount (YES) in the step S6, the control unit 25 requests the signal processing units 15, 22 to start the reproducing processing in step S7 and stores the restored signals obtained from the signal processing units 15, 22 to the output buffers 16, 23 sequentially in step S8.

Thereafter, the control unit 25 determines whether it has reached the output start time in step S9, and if it is determined that it has reached the output start time (YES), the control unit 25 makes the output buffers 16, 23 output the signals and starts multiplexing the signals in step S10, and outputs the multiplexed signals to the outside in step S11, and then ends the processing (step S12).

According to the embodiment, the accumulated data amounts of the input buffers 14, 21 are monitored, and the start timing of the reproducing processing is controlled, and the start timing of the multiplexing processing is controlled in synchronization with the output start time of the optical disk 12. It is possible to multiplex and output the input signals of plural systems in precise synchronization.

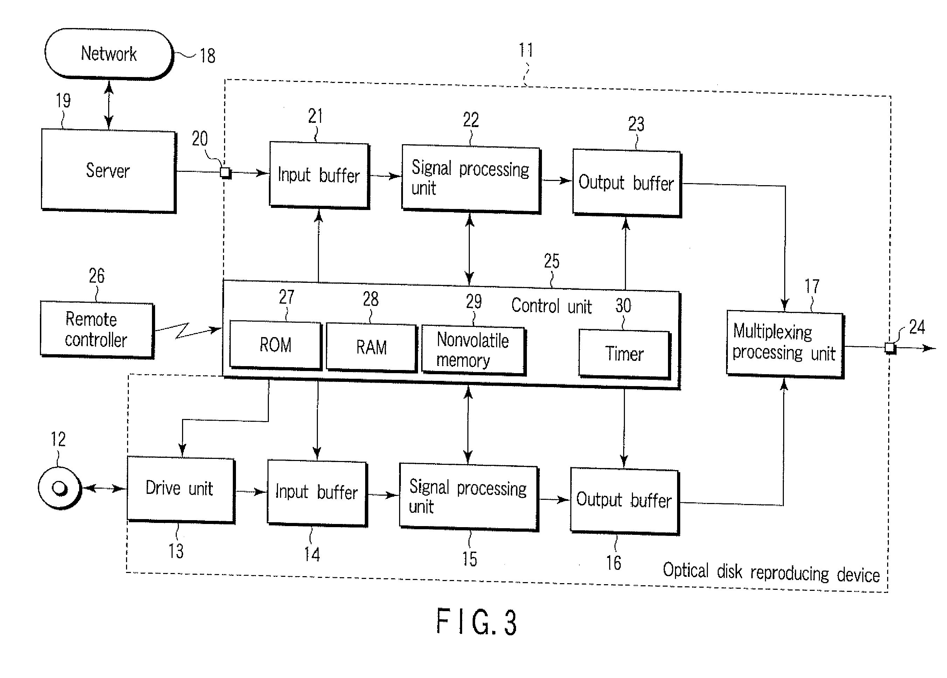

FIG. 3 shows a modified embodiment. In FIG. 3, an identical reference number is given to a same component as in FIG. 1, a control unit 25 includes a timer 30 for counting time.

Namely, depending on the degree of congestion of the line in a network 18, if signals from a server 19 cannot be obtained for a long time, there is a possibility that an optical disk reproducing device 11 cannot output multiplexed signals for a long time, in other words, the optical disk reproducing device 11 cannot start reproducing processing.

Therefore, in the modified embodiment shown in FIG. 3, the lapsed time from the moment when a data transfer is requested to the server 19 is counted by the timer 30, and in the case when data necessary for the reproducing processing is not transferred from the server 19 even after a lapse of a predetermined time, a signal processing unit 15 is instructed to start the reproducing processing. As a result, the reproducing processing is performed on only the signals obtained from an optical disk 12, and the restored signals thereof are output without being multiplexed with the signals from the server 19.

In this instance, the control unit 25 can make the multiplexing processing unit 17 multiplex and output information that the signals from the server 19 have not been multiplexed to a user, with the signals stored in an output buffer 16.

Meanwhile, the present invention is not limited to the above embodiments, but it may be embodied in other specific forms without departing from the spirit or essential characteristics thereof. Further, by appropriate combinations of plural structural components disclosed in each of the embodiments, it is possible to form various kinds of invention. For example, some structural elements may be deleted from all the elements shown in the embodiments. Furthermore, some structural elements in different embodiments may be combined appropriately.

## Claims

1. A signal output device **characterized by** comprising:
a first input buffer (14) configured to accumulate first signals including time information;
a first signal processing unit (15) configured to perform reproducing processing of the first signals accumulated in the first input buffer (14);
a second input buffer (21) configured to accumulate second signals;
a second signal processing unit (22) configured to perform reproducing processing of the second signals accumulated in the second input buffer (21);
a multiplexing processing unit (17) configured to multiplex and output the first signals after the reproducing processing in the first signal processing unit (15) and the second signals after the reproducing processing in the second signal processing unit (22); and
a control unit (25) configured to request the first and second signal processing units (15, 22) to start the reproducing processing, when the amount of the first signals processable by the first signal processing unit (15) has been accumulated in the first input buffer (14), and, the amount of the second signals processable by the second signal processing unit (22) has been accumulated in the second input buffer (21), and request the multiplexing processing unit (17) to start the multiplexing process, on the basis of the time information included in the first signals.

2. A signal output device according to claim 1, **characterized by** further comprising:
a first output buffer (16) configured to accumulate the first signals after the reproducing processing in the first signal processing unit (15), and output the first signals to the multiplexing processing unit (17); and
a second output buffer (23) configured to accumulate the second signals after the reproducing processing in the second signal processing unit (22), and output the second signals to the multiplexing processing unit (17); wherein
the control unit (25) is configured to make the first and second output buffers (16, 23) output the first and second signals, and request the multiplexing processing unit (17) to start the multiplexing processing, when output start time is reached, on the basis of the time information included in the first signals.

3. A signal output device according to claim 1, **characterized by** further comprising:
a time counting unit (30) configured to count the lapsed time from the moment when acquisition of the second signals is requested; wherein
the control unit (25) controls the multiplexing processing unit (17) to output the first signals after the reproducing processing in the first signal processing unit (15), when the second signals cannot be acquired after the lapse of a predetermined time by the time counting unit (30).

4. A signal output device according to claim 1, **characterized by** further comprising:
a drive unit (13) configured to read the first signals from an information storage medium (12) and output the first signals to the first input buffer (14) ; and
an input unit (20) configured to input the second signals from a server (19) connected to a network (18) and guide the second signals to the second input buffer (21).

5. A signal output method **characterized by** comprising:
a first step (S6) of detecting that the amount of first signals processable by a first signal processing unit (15) which performs reproducing processing of the first signals has been accumulated in a first input buffer (14) which accumulates the first signals including time information;
a second step (S5) of detecting that the amount of second signals processable by a second signal processing unit (22) which performs reproducing processing of the second signals has been accumulated in a second input buffer (21) which accumulates the second signals;
a third step (S7) of requesting the first and second signal processing units (15, 22) to start the reproducing processing, when it is detected that the amounts of the first and second signals processable have been accumulated in the first and second input buffers (14, 21) respectively at the first and second steps (S6, S5); and
a fourth step (S8 to S11) of requesting a multiplexing processing unit (17) to start the multiplexing processing of the first and second signals after the reproducing processing in the first and second signal processing units (15, 22) on the basis of the time information included in the first signals.

6. A signal output method according to claim 5,
**characterized in that**
the fourth step (S8 to S11) makes a first out buffer (16) which accumulates the first signals after the reproducing processing in the first signal processing unit (15) and outputs the first signals to the multiplexing processing unit (17), and a second output buffer (23) which accumulates the second signals after the reproducing processing in the second signal processing unit (22) and outputs the second signals to the multiplexing processing unit (17) output the first and second signals, and the fourth step (S8 to S11) requests the multiplexing processing unit (17) to start the multiplexing processing, when output start time is reached on the basis of the time information included in the first signals.

7. A signal output method according to claim 5,
**characterized in that**
the fourth step (S8 to S11) controls the multiplexing processing unit (17) to output the first signals after the reproducing processing in the first signal processing unit (15), when the second signals cannot be acquired after the lapse of a predetermined time from the moment when acquisition of the second signals is requested.

8. A signal output method according to claim 5,
**characterized by** further comprising:
a fifth step (13) of reading the first signals from an information storage medium (12) and outputting the first signals to the first input buffer (14); and
a sixth step (20) of inputting the second signals from a server (19) connected to a network (18) and guiding the second signals to the second input buffer (21).
